# FASCICULE DE BREVET EUROPEEN

(11) **EP 4 337 360 B1**
(45) Date de publication et mention de la délivrance du brevet: **05.11.2025**
(21) Numéro de dépôt: 22728224.1
(22) Date de dépôt: 09.05.2022
(51) Int. Cl.: B01D 29/54, B01D 35/027

(54) **FILTRE À EAU À DEUX COUCHES, REMPLAÇABLE, POUR UN RÉSERVOIR D'AUTOMOBILE**
ZWEILAGIGER, AUSTAUSCHBARER WASSERFILTER FÜR EINEN AUTOMOBILTANK
TWO-LAYER, REPLACEABLE WATER FILTER FOR A AUTOMOBILE TANK

(30) Priorité: 10.05.2021 LU 500142
(43) Date de publication de la demande: 20.03.2024
(73) Titulaire: OPmobility C-Power Belgium Research, 1200 Woluwe-Saint-Lambert (BE)
(72) Inventeur: NEJNAOUI, Younes, 1130 BRUXELLES (BE)
(74) Mandataire: LLR
(86) Numéro de dépôt international: PCT/EP2022/062505
(87) Numéro de publication internationale: WO 2022/238339

(56) Documents cités:
- WO-A1-2011/162103
- WO-A1-2018/072557
- WO-A1-2019/028944
- DE-B3- 102019 215 060
- US-A- 5 409 608

## Description

La présente invention concerne une unité de fourniture d'une solution aqueuse. Plus particulièrement, l'invention concerne une unité de fourniture d'une solution aqueuse d'un réservoir à un dispositif de consommation de la solution aqueuse dans un véhicule automobile. Par « véhicule automobile », on entend désigner tout matériel mobile, notamment, véhicules sur route, fer, mer, air, espace.

L'invention concerne également un réservoir pour le stockage d'une solution aqueuse destinée à être consommée par un dispositif de consommation de la solution aqueuse dans un véhicule automobile.

L'invention concerne aussi un système de réduction catalytique sélective destiné à purifier les gaz d'échappement d'un moteur à combustion interne d'un véhicule automobile.

L'invention concerne enfin un procédé pour filtrer les impuretés d'une solution aqueuse stockée dans un réservoir.

Une unité de fourniture d'une solution aqueuse d'un réservoir à un dispositif de consommation de la solution aqueuse dans un véhicule automobile est, par exemple, une unité de fourniture d'une solution d'additif à un catalyseur.

Un réservoir pour le stockage d'une solution aqueuse destinée à être consommée par un dispositif de consommation de la solution aqueuse dans un véhicule automobile est, par exemple, un réservoir d'une solution d'additif destinée à être consommée par un catalyseur.

Les législations sur les émissions des véhicules légers et poids lourds prévoient une diminution des rejets d'oxyde d'azote NO_{X} dans l'atmosphère. Pour atteindre cet objectif, on connaît le procédé de réduction catalytique sélective (« Selective Catalytic Reduction » en langue anglaise ou SCR) qui permet la réduction des oxydes d'azote par injection d'un agent réducteur, généralement d'ammoniac, dans la ligne d'échappement. Cet ammoniac peut provenir de la décomposition par thermolyse d'une solution d'un précurseur d'ammoniac dont la concentration peut être celle de l'eutectique. Un tel précurseur d'ammoniac est généralement une solution d'urée. Avec le procédé SCR, les dégagements élevés de NO_{X} produits dans le moteur lors d'une combustion à rendement optimisé sont traités en sortie de moteur dans un catalyseur. Ce traitement requiert l'utilisation de l'agent de réduction à un niveau de concentration précis et dans une qualité extrême. La solution est ainsi précisément dosée et injectée dans le flux de gaz d'échappement où elle est hydrolysée avant de convertir l'oxyde d'azote (NO_{X}) en azote (N₂) et en eau (H₂O). Pour ce faire, il est nécessaire d'équiper les véhicules d'un réservoir contenant une solution d'additif (une solution d'urée généralement), ainsi que d'un dispositif pour doser et injecter la quantité d'additif désirée dans la ligne d'échappement.

Pour éviter de boucher l'injecteur de solution d'additif avec des impuretés pouvant se trouver dans le réservoir de solution d'additif, il est connu de filtrer la solution d'additif avant son injection. Dans l'art antérieur, un filtre est agencé dans le réservoir d'additif à l'entrée d'une pompe d'injection de la solution d'additif permettant à la solution d'additif d'être pompée à travers le filtre. Par cette disposition, la solution d'additif est nettoyée de ses impuretés avant d'être injecter dans la ligne d'échappement, en amont du catalyseur. Le document WO 2011/162103 A1 divulgue un exemple de réservoir équipé d'un tel filtre.

Par « impureté », on entend désigner tout corps étranger à la solution d'additif, par exemple, des poussières, de la terre, des insectes, des copeaux du réservoir, des particules solides. Ces corps étrangers peuvent être en flottaison, en suspension ou déposés au fond du réservoir de solution d'additif.

Après un certain temps d'utilisation, les filtres se colmatent et doivent être remplacés. Le colmatage d'un filtre est d'autant plus rapide que les impuretés sont nombreuses et de grande taille.

Pour ne pas remplacer un filtre trop souvent, il est connu d'augmenter sa taille, mais cette solution n'est pas toujours satisfaisante. En effet, dans l'exemple d'un réservoir de solution d'additif utilisé dans un véhicule automobile, le réservoir a un volume limité qui ne permet pas de remplacer facilement un filtre préexistant par un filtre de plus grande taille. De plus, lorsqu'un composant se trouve dans le voisinage du filtre, l'augmentation de la taille du filtre peut conduire à une collision avec ce composant.

L'invention a notamment pour but de remédier aux inconvénients précités en fournissant une solution innovante permettant de ralentir le colmatage du filtre, sans augmenter la taille du filtre.

A cet effet, l'invention a pour objet une unité de fourniture d'une solution aqueuse d'un réservoir à un dispositif de consommation de la solution aqueuse dans un véhicule automobile selon la revendication 1.

Ainsi, le deuxième filtre enveloppe le premier filtre et le protège en retenant une partie des impuretés. Par cette disposition, le premier filtre se colmate plus lentement en utilisation, ce qui permet de le remplacer moins souvent. Ceci est particulièrement avantageux lorsque le premier filtre est plus coûteux à remplacer que le deuxième filtre.

Le rôle de l'unité de fourniture d'une solution aqueuse d'un réservoir à un dispositif de consommation de la solution aqueuse dans un véhicule automobile est de regrouper en un tout compact les composants utiles au contrôle et à l'injection de la solution aqueuse.

L'unité peut être obtenue par tout moyen connu, de préférence, elle est obtenue par injection, cette méthode permettant d'obtenir une bonne précision dimensionnelle. Dans le cas particulier où l'unité fournit une solution d'urée, l'unité est à base d'un matériau résistant à l'urée, tel que les polyacétals et, en particulier, le polyoxyméthylène (POM), les polyphtalamides (PPA) ou les polyamides (PA) et, en particulier, les grades renforcés, par exemple, à l'aide de fibres de verre. De préférence, l'unité est en polyamide.

Le fait que les moyens de fixation du fourreau sont des moyens de fixation amovible permet au fourreau d'être séparé volontairement du premier filtre et rend ainsi possible de remplacer le fourreau indépendamment du premier filtre. Un autre avantage de cette configuration est qu'il rend le fourreau modulable, c'est-à-dire qu'il permet de choisir d'insérer ou ne pas insérer le fourreau sur le premier filtre. En effet, lorsque l'invention est utilisée dans un environnement réputé « propre », il est avantageux de se passer du fourreau afin de réduire le coût de filtration. A contrario, lorsque l'invention est utilisée dans un environnement qui n'est pas réputé « propre », il est avantageux d'insérer le fourreau sur le premier filtre afin de ralentir le colmatage du premier filtre et réduire ainsi le coût de filtration lorsque le premier filtre coûte plus cher à remplacer que le deuxième filtre.

Selon des caractéristiques additionnelles de l'unité selon l'invention :
- le fourreau est configuré pour être inséré sur le premier filtre par coulissement. Ainsi, l'insertion du fourreau sur le premier filtre se fait en un seul mouvement ce qui minimise le nombre d'opérations d'assemblage.
- le fourreau comprend un canal interne creux muni d'au moins une rainure rectiligne dont la forme correspond à celle d'une nervure du premier filtre. Ainsi, le fourreau est guidé en translation lors de son insertion sur le premier filtre.
- le premier filtre possède une forme extérieure de parallélépipède rectangle plat, c'est-à-dire que l'épaisseur du parallélépipède rectangle est inférieure à sa hauteur et à sa largeur. Ainsi, le volume occupé par le premier filtre est minimisé, en comparaison à un premier filtre de même capacité ayant une forme cylindrique de section circulaire.
- le canal interne creux du fourreau possède des dimensions voisines des dimensions extérieures du premier filtre. Ainsi, le fourreau est ajusté sur le premier filtre.
- le fourreau possède une forme extérieure de parallélépipède rectangle plat. Ainsi, le volume occupé par le deuxième filtre est minimisé, en comparaison à un deuxième filtre de même capacité ayant une forme cylindrique de section circulaire.
- la nervure du premier filtre est formée par un bord du premier filtre. Ainsi, il n'y a pas besoin de modifier ou remplacer le premier filtre pour lui ajouter une nervure, ceci permet d'insérer le fourreau sur un premier filtre préexistant.
- les moyens de fixation amovible du fourreau comprennent un système choisi parmi un système de butée agencé entre une bride d'accouplement de l'unité et le premier filtre, un système de clipsage pour le blocage en position du fourreau par rapport au premier filtre, un système d'encliquetage agencé entre le fourreau et le premier filtre et un système d'insertion en force du fourreau sur le premier filtre. Ainsi, le fourreau est empêché de s'échapper involontairement du premier filtre.

Par l'expression « insertion en force du fourreau sur le premier filtre », on entend désigner le fait que l'insertion du fourreau sur le premier filtre se fait avec frottement. En fin d'insertion, les forces de frottement agissent comme une force de serrage du premier filtre par le fourreau.

Par « environnement réputé propre », on entend désigner un environnement dans lequel les impuretés susceptibles de se trouver dans le réservoir sont moindres.
- le fourreau est fermé par un couvercle. Ainsi, on empêche des impuretés d'atteindre le premier filtre sans passer par le deuxième filtre.
- l'unité comprend une pompe d'injection de la solution aqueuse et le premier filtre est agencé à l'entrée de la pompe d'injection de la solution aqueuse. Ainsi, le circuit de filtration est le plus court et compact possible. Avantageusement, la pompe d'injection de la solution aqueuse est entraînée par un moteur électrique.
- l'unité comprend au moins un composant choisi parmi un capteur de niveau, un élément chauffant, un capteur de température, un capteur de qualité et un capteur de pression. Ainsi, l'unité permet de regrouper davantage de composants utiles au contrôle et à l'injection de la solution aqueuse.
- la solution aqueuse est une solution de précurseur d'ammoniac, par exemple, une solution d'urée en tant qu'additif de gaz d'échappement. Ainsi, l'invention peut être utiliser pour filtrer une solution d'additif destinée à être consommée par un catalyseur.
- le premier filtre est un média filtrant comprenant des fibres synthétiques non tissées.

Ainsi, la durée de vie du premier filtre est prolongée et le débit de la solution aqueuse est augmenté, en comparaison à un premier filtre de même capacité ayant des fibres synthétiques tissées. Un exemple de média filtrant comprenant des fibres non tissées est décrit dans la demande de brevet publiée sous le numéro EP 2945720 A1.
- le deuxième filtre est un filtre à maille filtrante. Ainsi, le deuxième filtre est un filtre sans sophistication particulière qui lui permet d'être fabriqué et remplacé à moindre coût.
- la maille filtrante est fixée sur une armature rigide. Par « rigide », on entend désigner le fait que le module de Young de l'armature est supérieur au module de Young de la maille filtrante. Ainsi, le deuxième filtre est empêché de se déformer sous l'effet du débit de la solution aqueuse le traversant.
- la maille filtrante est une maille filtrante souple enroulée par-dessus ou par-dessous l'armature rigide pour former le deuxième filtre. Avantageusement, la maille filtrante souple et l'armature rigide sont réalisées en matière thermoplastique et la maille filtrante souple est fixée sur l'armature rigide par soudage plastique. On entend par « soudage plastique », un ensemble de techniques utilisées pour souder deux pièces en matière thermoplastique. Alternativement, la maille filtrante souple est fabriquée d'un seul tenant avec l'armature rigide.

L'invention a aussi pour objet un kit pour la fabrication d'une unité telle que définie dans ce qui précède, ce kit comprenant un fourreau tel que défini dans ce qui précède.

L'invention a également pour objet un réservoir pour le stockage d'une solution aqueuse destinée à être consommée par un dispositif de consommation de la solution aqueuse dans un véhicule automobile, réservoir comprenant l'unité précitée.

Selon des caractéristiques additionnelles du réservoir selon l'invention :
- l'unité est montée à étanchéité à travers une paroi du réservoir. Ainsi, les composants utiles au contrôle et à l'injection de la solution aqueuse sont amenés dans le réservoir après que le réservoir ait été fabriqué, en ménageant une ouverture ad hoc dans une paroi du réservoir. De préférence, l'unité est montée à étanchéité à travers une paroi de fond du réservoir, ceci permet aux composants utiles au contrôle et à l'injection de la solution aqueuse de rester immergés dans la solution aqueuse aussi longtemps que possible, sachant que la solution aqueuse - fournie à un dispositif de consommation de la solution aqueuse - quitte le réservoir par le fond de ce dernier.

Le réservoir selon l'invention peut être en une matière quelconque. Dans le cas particulier d'un réservoir à solution d'urée, la matière du réservoir est, de préférence, une matière ayant une bonne résistance chimique à l'urée. Il s'agit en général de matière plastique. Les polyoléfines, en particulier le polyéthylène et, plus particulièrement, le polyéthylène haute densité (PEHD), constituent des matériaux préférés. Ce réservoir peut être réalisé par tout procédé de transformation connu. Un mode de mise en œuvre connu est le procédé d'injection. Un mode de mise en œuvre préféré est le procédé d'extrusion-soufflage. Dans ce procédé, une paraison - en une ou plusieurs parties - est obtenue par extrusion puis mise en forme par soufflage dans un moule. Le moulage du réservoir d'un seul tenant à partir d'une paraison en une seule partie donne de bons résultats.

L'invention a aussi pour objet un système de réduction catalytique sélective destiné à purifier les gaz d'échappement d'un moteur à combustion interne d'un véhicule automobile, système comprenant le réservoir précité contenant une solution de précurseur d'ammoniac.

L'invention a enfin pour objet un procédé pour filtrer les impuretés d'une solution aqueuse stockée dans le réservoir précité, procédé comprenant les étapes suivantes :
a) utiliser le premier filtre pour retenir des premières impuretés de la solution aqueuse,
b) utiliser le deuxième filtre pour retenir des secondes impuretés de la solution aqueuse,
procédé dans lequel les premières impuretés traversent le deuxième filtre avant d'être retenues par le premier filtre.

Ainsi, le procédé empêche les impuretés de plus grande taille d'atteindre le premier filtre, ceci permet d'augmenter la longévité du premier filtre en ralentissant son colmatage.

### Brève description des figures

L'invention sera mieux comprise à la lecture de la description qui va suivre donnée uniquement à titre d'exemple et faite en se référant aux dessins annexés dans lesquels :
- la figure 1 est une vue en perspective d'une unité de fourniture d'une solution aqueuse équipée d'un fourreau selon l'invention,
- la figure 2 est une vue en coupe d'une unité de fourniture d'une solution aqueuse selon l'invention,
- la figure 3 est une vue en perspective d'un premier filtre et d'un fourreau selon l'invention,
- la figure 4 est une vue en perspective d'une unité de fourniture d'une solution aqueuse dépourvue de fourreau,
- la figure 5 est une vue en coupe d'une unité de fourniture d'une solution aqueuse dépourvue de fourreau,
- la figure 6 est une vue en perspective d'un premier filtre et d'un fourreau selon une variante de réalisation de l'invention,
- la figure 7 est une vue en perspective d'un réservoir selon l'invention,
- la figure 8 est une vue en perspective d'un premier filtre.

### Description détaillée

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées et/ou interchangées pour fournir d'autres réalisations.

Dans la présente description, on peut indexer certains éléments ou paramètres, par exemple, premier élément ou deuxième élément ainsi que premier paramètre et second paramètre ou encore premier critère et deuxième critère, etc. Dans ce cas, il s'agit d'un simple indexage pour différencier et dénommer des éléments ou paramètres ou critères proches mais non identiques. Cette indexation n'implique pas une priorité d'un élément, paramètre ou critère par rapport à un autre et on peut aisément interchanger de telles dénominations sans sortir du cadre de la présente description. Cette indexation n'implique pas non plus un ordre dans le temps par exemple pour apprécier tel ou tel critère.

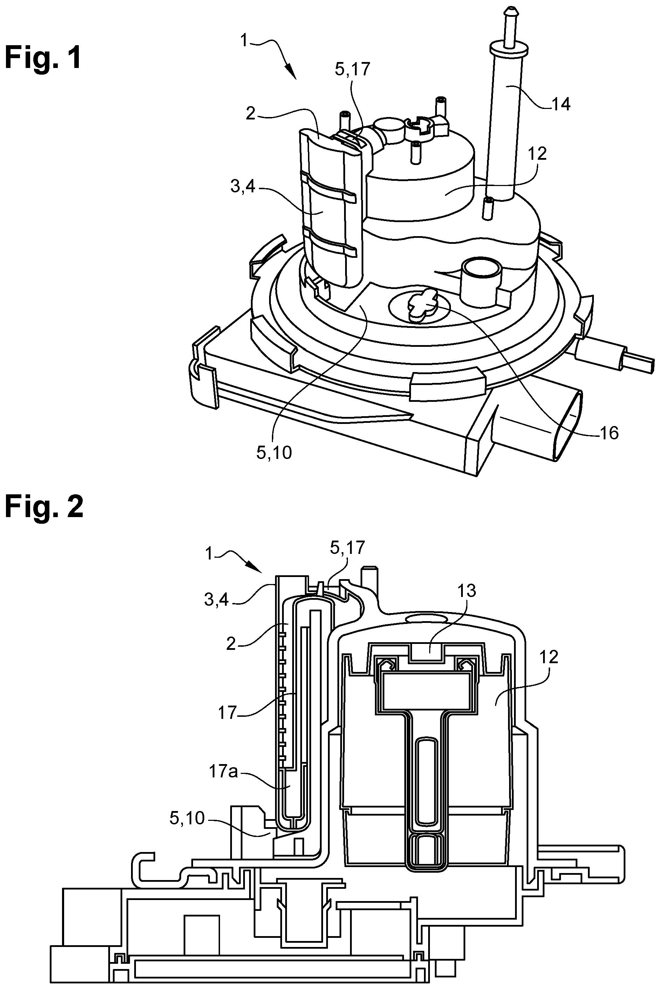

Les figures 1 et 2 illustrent une unité 1 de fourniture d'une solution aqueuse d'un réservoir à un dispositif de consommation de la solution aqueuse dans un véhicule automobile (non représenté). L'unité 1 comprend un premier filtre 2, un fourreau 3 configuré pour former un deuxième filtre 4 et pour être inséré sur le premier filtre 2, et des moyens 5 de fixation du fourreau 3.

Dans l'exemple, le fourreau 3 est configuré pour être inséré sur le premier filtre 2 par coulissement.

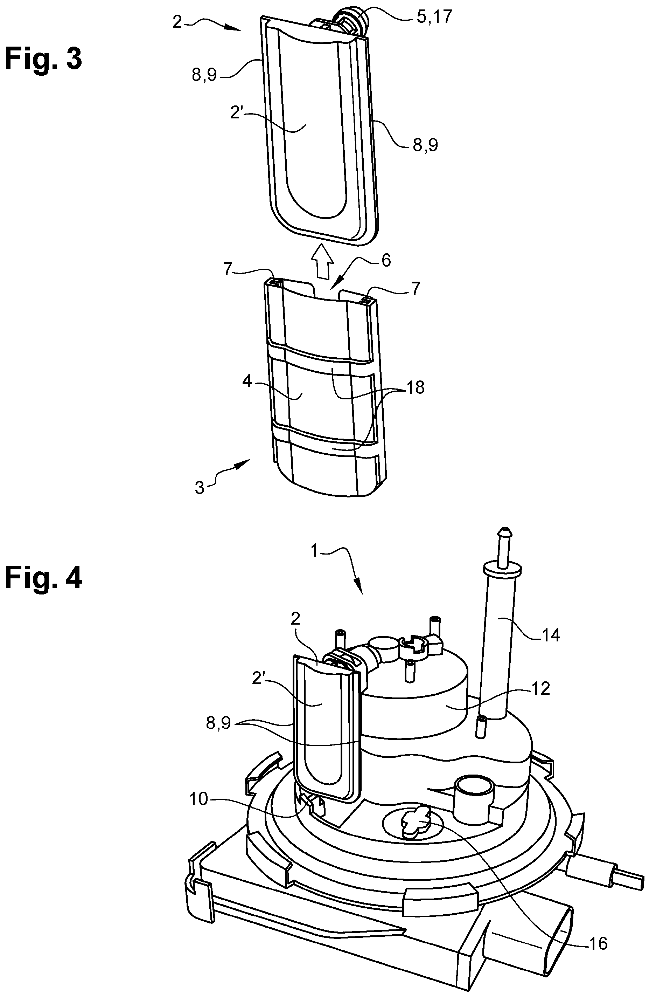

La figure 3 illustre le fourreau 3 avant son insertion sur le premier filtre 2. La flèche représentée entre le fourreau et le premier filtre 2 indique la direction d'insertion du fourreau 3 sur le premier filtre 2. Le premier filtre 2 comprend deux nervures 8 et le fourreau 3 comprend un canal interne creux 6 muni de deux rainures rectilignes 7 dont la forme correspond à celle des deux nervures 8. Cette configuration permet de guider en translation le fourreau 3 sur le premier filtre 2 lors de son insertion.

Le premier filtre 2 comporte un corps creux 2'. Avantageusement, le corps creux 2' du premier filtre 2 possède une forme extérieure de parallélépipède rectangle plat et le canal interne creux 6 du fourreau 3 possède des dimensions voisines des dimensions extérieures du corps creux 2' du premier filtre 2.

Le fourreau 3 possède une forme extérieure de parallélépipède rectangle plat.

Avantageusement, les nervures 8 du premier filtre 2 sont formées par un bord 9 du premier filtre 2. A cette fin, l'épaisseur du premier filtre 2 est plus faible sur le bord 9 qu'au centre du premier filtre 2. Dans l'exemple illustré, le bord 9 fait le tour du premier filtre 2 sur trois de ses quatre cotés.

Pour empêcher le fourreau 3 de se séparer involontairement du premier filtre 2, les moyens 5 de fixation du fourreau 3 comprennent un système choisi parmi un système de butée (voir figures 1 et 2) agencé entre une bride d'accouplement 10 de l'unité 1 et le premier filtre 2, un système d'encliquetage (non représenté) agencé entre le fourreau 3 et le premier filtre 2 et un système d'insertion en force (non représenté) du fourreau 3 sur le premier filtre 2.

Dans l'exemple illustré aux figures 1 et 2, la séparation involontaire du fourreau 3 est empêchée par un système de butée agencé entre la bride d'accouplement 10 de l'unité 1 et le premier filtre 2. En effet, le coulissement du fourreau 3 est empêché d'un côté par la bride d'accouplement 10 et de l'autre côté par une partie d'une tubulure 17 faisant saillie du corps creux 2' du premier filtre 2.

Avantageusement, les moyens 5 de fixation du fourreau 3 sont des moyens de fixation amovible. Cette caractéristique permet une séparation volontaire du fourreau 3, par exemple, pour remplacer le deuxième filtre 4.

Selon une variante de réalisation, un système d'insertion en force du fourreau 3 sur le premier filtre 2 permet d'empêcher le fourreau 3 de se séparer involontairement du premier filtre 2. On prévoit dans ce cas qu'une dimension extérieure du premier filtre 2 est supérieure à une dimension intérieure du fourreau 3, par exemple une dimension du canal interne creux 6, afin d'obtenir un effet de serrage du premier filtre 2 par le fourreau 3 lorsque que le fourreau 3 est inséré sur le premier filtre 2. Bien entendu, l'insertion en force du fourreau 3 sur le premier filtre 2 est réversible afin d'assurer l'amovibilité des moyens 5 de fixation du fourreau 3.

L'unité 1 comprend une pompe 12 d'injection de la solution aqueuse et le premier filtre 2 est agencé à l'entrée 13 de la pompe 12 d'injection de la solution aqueuse.

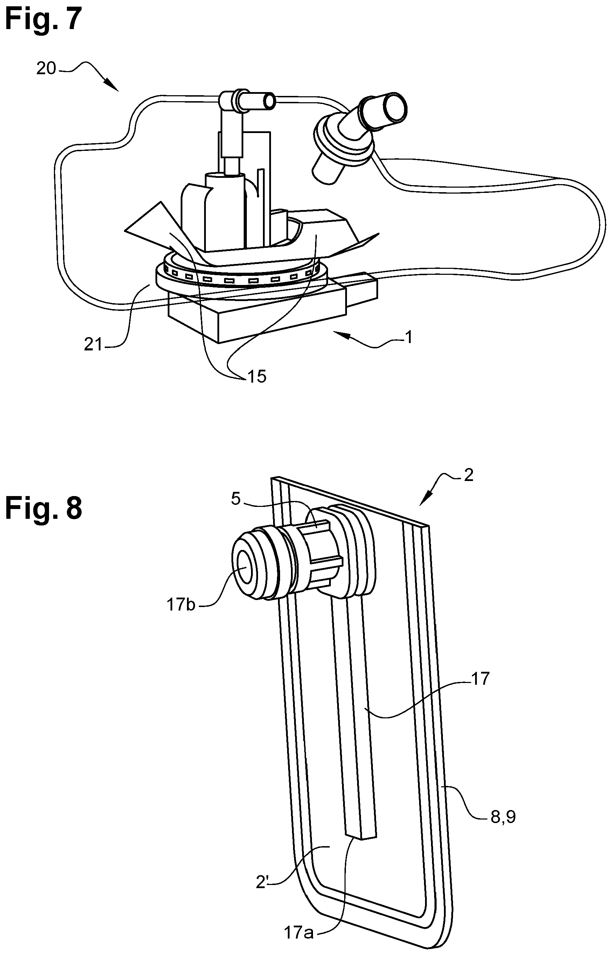

L'unité 1 comprend au moins un composant choisi parmi un capteur de niveau 14, un élément chauffant 15 (voir figure 7), un capteur de température 16, un capteur de qualité (non représenté) et un capteur de pression (non représenté).

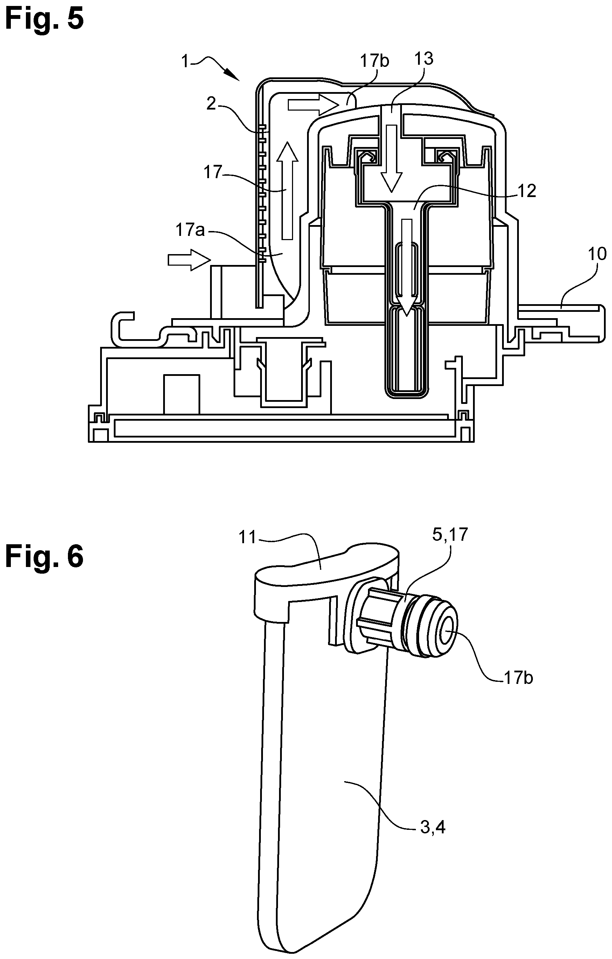

Les figures 4 et 5 illustrent l'unité 1 dans laquelle le premier filtre 2 est dépourvu de fourreau. Cette configuration est préférée lorsque l'invention est utilisée dans un environnement réputé « propre ». Les cinq flèches représentées sur la figure 5 indiquent la direction d'écoulement de la solution aqueuse de l'entrée du premier filtre 2 à la sortie de la pompe 12.

Le premier filtre 2 est un média filtrant comprenant des fibres synthétiques non tissées et le deuxième filtre 4 est un filtre à maille filtrante.

La maille filtrante est fixée sur une armature rigide 18 (voir figure 3).

La maille filtrante est une maille filtrante souple enroulée par-dessus ou par-dessous l'armature rigide 18 pour former le deuxième filtre 4. Avantageusement, la maille filtrante souple et l'armature rigide 18 sont réalisées en matière thermoplastique et la maille filtrante souple est fixée sur l'armature rigide 18 par soudage plastique. Alternativement, la maille filtrante souple est fabriquée d'un seul tenant avec l'armature rigide 18.

La figure 6 illustre une variante de réalisation dans laquelle le fourreau 3 est fermé par un couvercle 11.

La figure 7 illustre une réservoir 20 pour le stockage d'une solution aqueuse destinée à être consommée par un dispositif de consommation de la solution aqueuse dans un véhicule automobile, le réservoir comprenant l'unité 1. Le réservoir 20 est montré en transparence pour voir l'intérieur du réservoir.

Avantageusement, l'unité 1 est montée à étanchéité à travers une paroi du réservoir 20. De préférence, l'unité 1 est montée à étanchéité à travers une paroi de fond 21 du réservoir 20. L'unité 1 comprend un élément chauffant 15.

La figure 8 illustre un premier filtre 2 dans lequel une tubulure 17 est agencée en partie à l'intérieur du corps creux 2' du premier filtre 2 et en partie à l'extérieur de ce dernier. Le corps creux 2' est montré en transparence pour voir que la tubulure 17 a une forme en L avec une grande branche perpendiculaire à une petite branche. L'extrémité libre de la grande branche présente un orifice d'entrée 17a de la solution aqueuse et l'extrémité libre de la petite branche présente un orifice de sortie 17b de la solution aqueuse. L'orifice d'entrée 17a est agencé à l'intérieur du corps creux 2' du premier filtre 2 et l'orifice de sortie 17b est agencé à l'extérieur du corps creux 2'. La solution aqueuse pompée par le pompe 12 et filtrée par le deuxième filtre 4 pénètre dans la tubulure 17 par l'orifice d'entrée 17a et ressort de la tubulure 17 par l'orifice de sortie 17b. La solution aqueuse sortant par l'orifice de sortie 17b est dirigée vers l'entrée 13 de la pompe 12 d'injection de la solution aqueuse (voir figure 5).

Le premier filtre 2 et le deuxième filtre 4 sont utilisés dans un procédé pour filtrer les impuretés d'une solution aqueuse stockée dans le réservoir 20. Le procédé comprend les étapes suivantes :
a) utiliser le premier filtre 2 pour retenir des premières impuretés de la solution aqueuse,
b) utiliser le deuxième filtre 4 pour retenir des secondes impuretés de la solution aqueuse,
procédé dans lequel les premières impuretés traversent le deuxième filtre 4 avant d'être retenues par le premier filtre 2.

Dans un exemple, la solution aqueuse est une solution de précurseur d'ammoniac et le dispositif de consommation de la solution aqueuse est un catalyseur (non représenté) d'un système de réduction catalytique sélective (SCR) destiné à purifier les gaz d'échappement d'un moteur à combustion interne d'un véhicule automobile. Le système SCR comprend un réservoir 20 contenant la solution de précurseur d'ammoniac.

Dans un autre exemple, la solution aqueuse est de l'eau déminéralisée et le dispositif de consommation de la solution aqueuse est un moteur à combustion interne (non représenté).

### Liste de références

1 : unité de fourniture d'une solution aqueuse d'un réservoir à un dispositif de consommation de la solution aqueuse dans un véhicule automobile
2 : premier filtre
2' : corps creux du premier filtre
3 : fourreau
4 : deuxième filtre
5 : moyens de fixation du fourreau
6 : canal interne creux
7 : rainure rectiligne
8 : nervure du premier filtre
9 : bord du premier filtre
10 : bride d'accouplement
11 : couvercle
12 : pompe d'injection de la solution aqueuse
13 : entrée de la pompe d'injection de la solution aqueuse
14 : capteur de niveau
15 : élément chauffant
16 : capteur de température
17 : tubulure
17a : orifice d'entrée
17b : orifice de sortie
18 : armature rigide
20 : réservoir pour le stockage d'une solution aqueuse destinée à être consommée par un dispositif de consommation de la solution aqueuse dans un véhicule automobile
21 : paroi de fond du réservoir

## Revendications

1. Unité (1) de fourniture d'une solution aqueuse d'un réservoir à un dispositif de consommation de la solution aqueuse dans un véhicule automobile, unité comprenant un premier filtre (2), un fourreau (3) configuré pour former un deuxième filtre (4) et pour être inséré sur le premier filtre (2), et des moyens (5) de fixation du fourreau (3) par rapport au premier filtre (2), les moyens (5) de fixation du fourreau (3) étant des moyens de fixation amovible, le fourreau (3) comprenant un canal interne creux (6) muni d'au moins une rainure rectiligne (7) dont la forme correspond à celle d'une nervure (8) du premier filtre (2), **caractérisée en ce que** la nervure (8) du premier filtre (2) est formée par un bord (9) du premier filtre (2).

2. Unité selon la revendication 1, **caractérisé en ce que** le fourreau (3) est configuré pour être inséré sur le premier filtre (2) par coulissement.

3. Unité selon la revendication 1 ou 2, **caractérisé en ce que** le premier filtre (2) possède une forme extérieure de parallélépipède rectangle plat, et **en ce que** le canal interne creux (6) du fourreau (3) possède des dimensions voisines des dimensions extérieures du premier filtre (2).

4. Unité selon l'une quelconque des revendications 1 à 3, **caractérisé en ce que** les moyens (5) de fixation amovible du fourreau (3) comprennent un système choisi parmi un système de butée agencé entre une bride d'accouplement (10) de l'unité (1) et le premier filtre (2), un système de clipsage pour le blocage en position du fourreau (3) par rapport au premier filtre (2), un système d'encliquetage agencé entre le fourreau (3) et le premier filtre (2) et un système d'insertion en force du fourreau (3) sur le premier filtre (2).

5. Unité selon l'une quelconque des revendications 1 à 4, **caractérisé en ce que** le fourreau (3) est fermé par un couvercle (11).

6. Unité selon l'une quelconque des revendications 1 à 5, **caractérisé en ce qu'**il comprend une pompe (12) d'injection de la solution aqueuse et **en ce que** le premier filtre (2) est agencé à l'entrée (13) de la pompe (12) d'injection de la solution aqueuse.

7. Unité selon l'une quelconque des revendications 1 à 6, **caractérisé en ce que** le premier filtre (2) est un média filtrant comprenant des fibres synthétiques non tissées et le deuxième filtre (4) est un filtre à maille filtrante.

8. Unité selon l'une quelconque des revendications 1 à 7, **caractérisé en ce que** la solution aqueuse est une solution de précurseur d'ammoniac.

9. Kit pour la fabrication d'une unité selon l'une quelconque des revendications 1 à 8, **caractérisé en ce qu'**il comprend un fourreau (3) selon la revendication 1.

10. Réservoir (20) pour le stockage d'une solution aqueuse destinée à être consommée par un dispositif de consommation de la solution aqueuse dans un véhicule automobile, réservoir comprenant une unité (1) selon l'une quelconque des revendications 1 à 8.

11. Réservoir selon la revendication 10, **caractérisé en ce que** l'unité (1) est montée à étanchéité à travers une paroi du réservoir (20), de préférence, l'unité (1) est montée à étanchéité à travers une paroi de fond (21) du réservoir (20).

12. Système de réduction catalytique sélective destiné à purifier les gaz d'échappement d'un moteur à combustion interne d'un véhicule automobile, système comprenant un réservoir (20) selon l'une quelconque des revendications 10 à 11 prise en combinaison avec la revendication 8.

13. Procédé pour filtrer les impuretés d'une solution aqueuse stockée dans un réservoir (20) selon l'une quelconque des revendications 10 à 11, procédé comprenant les étapes suivantes :
a) utiliser le premier filtre (2) pour retenir des premières impuretés de la solution aqueuse,
b) utiliser le deuxième filtre (4) pour retenir des secondes impuretés de la solution aqueuse,
procédé dans lequel les premières impuretés traversent le deuxième filtre (4) avant d'être retenues par le premier filtre (2).

## Patentansprüche

1. Einheit (1) zum Bereitstellen einer wässrigen Lösung aus einem Tank an eine Vorrichtung, die die wässrige Lösung in einem Kraftfahrzeug verbraucht, wobei die Einheit einen ersten Filter (2), eine Hülse (3), die eingerichtet ist, um einen zweiten Filter (4) zu bilden und um auf den ersten Filter (2) aufgesetzt zu werden, und Mittel (5) zum Befestigen der Hülse (3) relativ zu dem ersten Filter (2) umfasst, wobei die Mittel (5) zum Befestigen der Hülse (3) Mittel zum entfernbaren Befestigen sind, wobei die Hülse (3) einen hohlen Innenkanal (6) umfasst, der mit wenigstens einer geradlinigen Nut (7) versehen ist, deren Form der einer Rippe (8) des ersten Filters (2) entspricht, **dadurch gekennzeichnet, dass** die Rippe (8) des ersten Filters (2) von einem Rand (9) des ersten Filters (2) gebildet ist.

2. Einheit nach Anspruch 1, **dadurch gekennzeichnet, dass** die Hülse (3) eingerichtet ist, um auf den ersten Filter (2) aufgeschoben zu werden.

3. Einheit nach Anspruch 1 oder 2, **dadurch gekennzeichnet, dass** der erste Filter (2) die äußere Form eines flächigen rechteckigen Parallelepipeds besitzt, und dadurch, dass der hohle Innenkanal (6) der Hülse (3) Abmessungen nahe der äußeren Abmessungen des ersten Filters (2) besitzt.

4. Einheit nach einem der Ansprüche 1 bis 3, **dadurch gekennzeichnet, dass** die Mittel (5) zum entfernbaren Befestigen der Hülse (3) ein System umfassen, ausgewählt aus einem Anschlagsystem, das zwischen einem Flansch (10) zum Koppeln der Einheit (1) und dem ersten Filter (2) angeordnet ist, einem Klipssystem zum Festlegen der Hülse (3) relativ zu dem ersten Filter (2), einem Einrastsystem, das zwischen der Hülse (3) und dem ersten Filter (1) angeordnet ist, und einem System zum Aufpressen der Hülse (3) auf den ersten Filter (2).

5. Einheit nach einem der Ansprüche 1 bis 4, **dadurch gekennzeichnet, dass** die Hülse (3) von einem Deckel (11) verschlossen ist.

6. Einheit nach einem der Ansprüche 1 bis 5, **dadurch gekennzeichnet, dass** sie eine Pumpe (12) zum Einspritzen der wässrigen Lösung umfasst, und dadurch, dass der erste Filter (2) am Eingang (13) der Pumpe (12) zum Einspritzen der wässrigen Lösung angeordnet ist.

7. Einheit nach einem der Ansprüche 1 bis 6, **dadurch gekennzeichnet, dass** der erste Filter (2) ein Medienfilter ist, der synthetische Vliesfasern umfasst, und der zweite Filter (4) ein Siebfilter ist.

8. Einheit nach einem der Ansprüche 1 bis 7, **dadurch gekennzeichnet, dass** die wässrige Lösung eine Ammoniak-Vorläufer-Lösung ist.

9. Kit für die Herstellung einer Einheit nach einem der Ansprüche 1 bis 8, **dadurch gekennzeichnet, dass** es eine Hülse (3) nach Anspruch 1 umfasst.

10. Tank (20) zum Bevorraten einer wässrigen Lösung, die dazu bestimmt ist, von einer Vorrichtung, die die wässrige Lösung in einem Kraftfahrzeug verbraucht, verbraucht zu werden, wobei der Tank eine Einheit (1) nach einem der Ansprüche 1 bis 8 umfasst.

11. Tank nach Anspruch 10, **dadurch gekennzeichnet, dass** die Einheit (1) abdichtend durch eine Wand des Tanks (20) hindurch montiert ist, bevorzugt die Einheit (1) abdichtend durch eine Bodenwand (21) des Tanks (20) hindurch montiert ist.

12. Selektives katalytisches Reduktionssystem, das dazu bestimmt ist, die Abgase einer Brennkraftmaschine eines Kraftfahrzeugs zu reinigen, wobei das System einen Tank (20) nach einem der Ansprüche 10 bis 11 in Kombination mit Anspruch 8 umfasst.

13. Verfahren zum Filtern der Verunreinigungen einer in einem Tank (20) bevorrateten wässrigen Lösung nach einem der Ansprüche 10 bis 11, wobei das Verfahren die folgenden Schritte umfasst:
a) Verwenden des ersten Filters (2), um erste Verunreinigungen der wässrigen Lösung zurückzuhalten,
b) Verwenden des zweiten Filters (4), um zweite Verunreinigungen der wässrigen Lösung zurückzuhalten,
wobei die ersten Verunreinigungen den zweiten Filter (4) durchqueren, bevor sie von dem ersten Filter (2) zurückgehalten werden.

## Claims

1. A unit (1) for providing an aqueous solution from a tank to a device for consuming the aqueous solution in a motor vehicle, which unit comprises a first filter (2), a sheath (3) configured to form a second filter (4) and to be inserted on the first filter (2), and means (5) for attaching the sheath (3) relative to the first filter (2), the means (5) for attaching the sheath (3) being removable attachment means, the sheath (3) comprising a hollow inner channel (6) provided with at least one rectilinear groove (7), the shape of which corresponds to that of a rib (8) of the first filter (2), **characterized in that** the rib (8) of the first filter (2) is formed by an edge (9) of the first filter (2).

2. The unit according to claim 1, **characterized in that** the sheath (3) is configured to be inserted on the first filter (2) by sliding.

3. The unit according to claim 1 or 2, **characterized in that** the first filter (2) has an exterior shape of a flat rectangular parallelepiped, and **in that** the inner hollow channel (6) of the sheath (3) has dimensions close to the outer dimensions of the first filter (2).

4. The unit according to any one of claims 1 to 3, **characterized in that** the removable attachment means (5) of the sheath (3) comprise a system chosen from a stop system arranged between a coupling flange (10) of the unit (1) and the first filter (2), a clipping system for locking the sheath (3) in position relative to the first filter (2), a snap-fastening system arranged between the sheath (3) and the first filter (2) and a system for forcibly inserting the sheath (3) on the first filter (2).

5. The unit according to any one of claims 1 to 4, **characterized in that** the sheath (3) is closed by a cover (11).

6. The unit according to any one of claims 1 to 5, **characterized in that** it comprises a pump (12) for injecting the aqueous solution and **in that** the first filter (2) is arranged at the inlet (13) of the aqueous solution injection pump (12).

7. The unit according to any one of claims 1 to 6, **characterized in that** the first filter (2) is a filter medium comprising non-woven synthetic fibers and the second filter (4) is a filtering mesh filter.

8. The unit according to any one of claims 1 to 7, **characterized in that** the aqueous solution is an ammonia precursor solution.

9. A kit for the manufacture of a unit according to any one of claims 1 to 8, **characterized in that** it comprises a sheath (3) according to claim 1.

10. A tank (20) for storing an aqueous solution intended to be consumed by a device for consuming the aqueous solution in a motor vehicle, the tank comprising a unit (1) according to any one of claims 1 to 8.

11. The tank according to claim 10, **characterized in that** the unit (1) is mounted sealably through a wall of the tank (20), preferably, the unit (1) is mounted sealably through a bottom wall (21) of the tank (20).

12. A selective catalytic reduction system intended to purify the exhaust gases of an internal combustion engine of a motor vehicle, which system comprises a tank (20) according to any one of claims 10 to 11 taken in combination with claim 8.

13. A method for filtering impurities from an aqueous solution stored in a tank (20) according to any one of claims 10 to 11, which method comprises the following steps:
a) using the first filter (2) to retain first impurities of the aqueous solution,
b) using the second filter (4) to retain second impurities of the aqueous solution,
method wherein the first impurities pass through the second filter (4) before being retained by the first filter (2).
